# EUROPEAN PATENT SPECIFICATION

(11) **EP 1 743 547 B1**
(45) Date of publication and mention of the grant of the patent: **08.05.2013**
(21) Application number: 06117059.3
(22) Date of filing: 12.07.2006
(51) Int. Cl.: A46B 7/04, A61C 15/00

(54) **Improved interdental brush device with sliding cap**
Interdentalbürste mit verschiebbarer Kappe
Brosse interdentaire avec capuchon coulissant

(30) Priority: 14.07.2005 IT MI20050258 U
(43) Date of publication of application: 17.01.2007
(73) Proprietor: PONZINI S.p.A., 20020 Lazzate (Milano) (IT)
(72) Inventor: Ponzini, Eligio, 20123, MILANO (IT)
(74) Representative: Faggioni, Carlo Maria

(56) References cited:
- EP-A1- 0 537 663
- US-A- 5 435 033

## Description

The present invention concerns an interdental brush device, in particular a device equipped with a sliding cap.

A known interdental brush, which proved particularly effective, is the one shown in EP537663 in the same Applicant's name.

This device consists of a handle support, at the end whereof a transversal through-hole and a sliding cap are provided. The cap has two elongated openings, a front one and a rear one, through which the deformable stem of the replaceable brush is introduced, which is then folded down and retained on the support. The front opening - i.e. on the side from which the brush projects - also defines the upper and lower end-stop of the cap, since the shorter sides thereof are intended to come into abutment with a small projecting pin coaxial with the transversal hole for brush introduction.

The cross section of the cap and, consequently, of the support end, is substantially rectangular.

This specific configuration, as well as the dimensioning adopted so far, have required to provide a flexible flap on the front side, on the edge of the elongated opening, the deformation whereof allows to fit the cap on the support upon assembling the device, introducing said cap from the end thereof, despite the presence of the projecting pin.

This flap is defined as a portion of the cap wall limited by two parallel slits.

However, it has been detected that this configuration may be improved, since flap flexibility also tends to allow full cap removal if the user applies excessive traction on the cap pulling in an opposite direction to the support end. Moreover, the presence of two slits to the sides of the flap represents possible starting points for cracks which end up breaking the cap.

US 5.435.033 discloses un interdental toothcleaner holder equipped with a cap at its end portion. The cap has a rear opening and a front slot which is open up to the inlet mouth of the cap. Due to the fact that the front slot is end-opened from the side of the inlet mouth of the cap, this latter may be inserted without problems on the end portion of the support notwithstanding there is a projecting pin on the front side.

For both safety and practical reasons, it is instead desired to provide an interdental brush device wherein the cap may still be fitted introducing the same from the support end, but may not be easily removed, not even applying considerable traction. Moreover, it is desired to provide a cap which, in order to be fitted, does not necessarily require the presence of a flexible flap equipped with side slits, which ends up weakening the cap structure.

Such object is perfectly achieved by a device as described in its essential features in the accompanying main claim, i.e. a interdental brush device comprising a support end, provided with a transversal hole capable of housing a deformable stem of a replaceable interdental brush, onto which a cap may be fitted, slidable between two end-stop positions determined by the abutment of a first opening thereof with a pin projecting coaxially with said transversal hole, the cap further exhibiting a second opening opposite to the first one allowing said deformable stem to pass through, the top portion of said support having a curved back profile connecting with the top end of said support and the cross-section profile of said support end being rounded at least on its back side.

The portion connecting the back profile with the top end of the support has a curvature radius gently decreasing towards the top end from about 25 cm to about 2 cm.

The cap has a base segment, between a mouth rim thereof and the proximal edge of the first opening, which may be over 5mm, preferably over 7 mm, long. The cross-section of said support end is D-shaped with rounded-off edges.

Features and advantages of the interdental brush device according to the invention will in any case be more evident from the following detailed description, given by way of example and illustrated in the accompanying drawings, wherein:
fig. 1A is a perspective view, from the right front side, of a preferred embodiment of the support of the invention;
fig. 1B is a similar view to that of fig. 1A taken from the rear left side;
fig. 2A is a view of the cap according to the invention taken according to the perspective of fig. 1A;
fig. 2B is a view of the cap according to the invention taken according to the perspective of fig. 1B;
figs. 3A and 3B are similar views of the interdental brush device according to the present invention in a full embodiment;
fig. 4 is a rear elevation view of the device of figs. 3A and 3B;
fig. 5 is a cross-section view taken along line V-V of fig. 4; and
fig. 6 is a cross-section view of the cap portion according to the invention.

In the following description, reference will be made to an interdental brush device wherein the support portion may be disengaged from a handle portion. This particular embodiment must not be intended as a limiting one, since the same teachings offered here may be applied to a support integral with the handle. In any case, the handle portion and the engaging elements will not be described here in further detail because they do not form the subject of the present application.

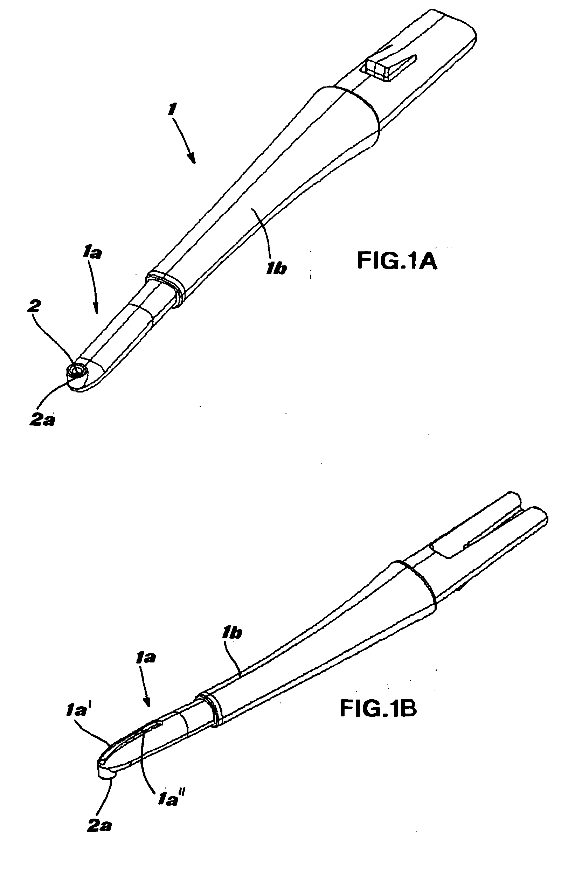

As shown in figs. 1A and 1B, a support 1 of an interdental brush device is formed as an elongated body, for example moulded of a plastic material, at the end whereof a through-hole 2 is provided lying transversally to the main axis of the support. Hole 2 is obtained coaxially to a pin 2a which projects transversally from the end portion.

A significant length of the end portion 1a is advantageously of a smaller section than the remaining neck part 1b, allowing to house a cap capable of being flush with the support main portion.

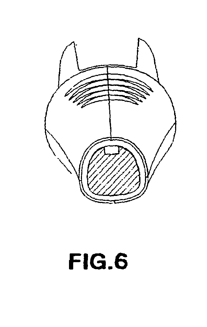

As can be appreciated, in particular from fig. 6, according to the invention at least end portion 1a has a substantially D-shaped cross-section profile, in particular with a wide curvature on its rear or back side (the one visible in fig. 1B) and a substantially flat front side (fig. 1A), connected with the rear side. This shape is particularly advantageous for the reasons highlighted here below.

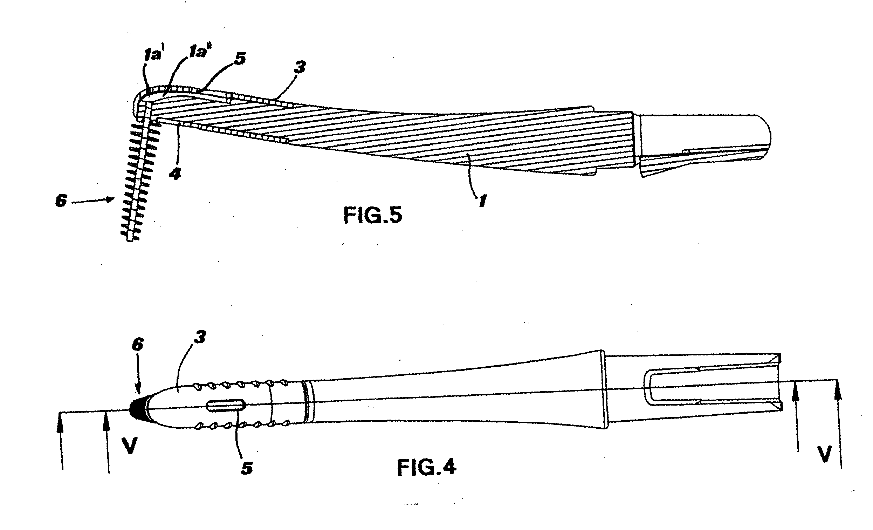

Moreover, according to the invention, the top portion 1a' of support end portion 1a has a back profile - i.e. the one on the side opposite to the front side from where pin 2a projects - which gently curves down towards pin 2a, as is well visible in figs. 1B and 5. Although the curvature of this area may well be defined through a "spline", it may be exemplarily approximated as having a curvature radius which, for example, is initially 25 cm, then about 8 cm and finally, at its point of connection with pin 2a, about 2 cm.

Along the back line of such profile, a groove 1a'' is further provided, intended to house the deformable stem of a replaceable interdental brush, as will be shown further down.

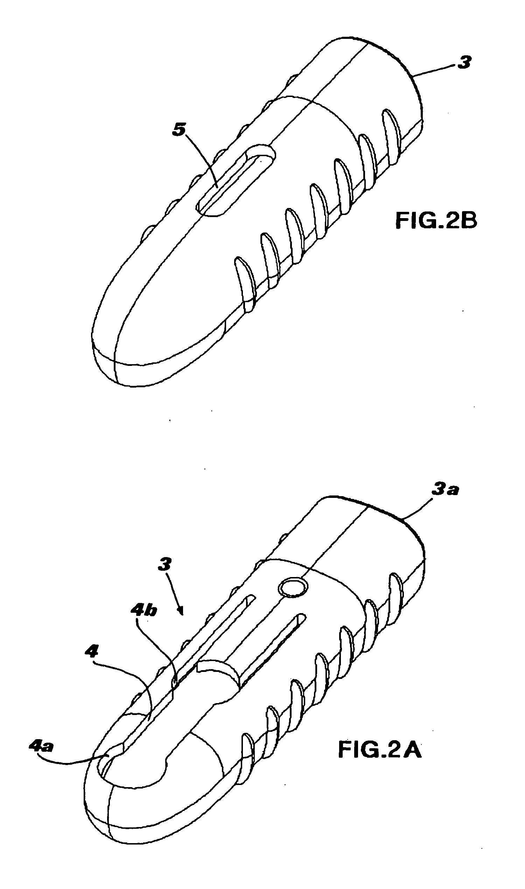

On the end portion 1a of the support, as already mentioned, a cap 3 - clearly shown in figs. 2A and 2B - is intended to be fitted. The cap is shaped as a hollow body, with a mouth rim 3a in correspondence of the base thereof, and has an inner surface which matches the one of the end portion 1a of support 1 and allows longitudinal sliding thereof.

On the front side of cap 3, said cap has a first opening 4 flaring out at its ends into two round-shaped eyes 4a and 4b having a diameter substantially equal to that of pin 2a. Thereby, cap 3 may slide between two end-stop positions determined by the engagement of each eye 4a and 4b with pin 2a. Therefore, the distance between the centres of these two round-shaped eyes 4a and 4b also determines the length of the run permitted to cap 3.

On the back side the cap has a second opening 5, suitable for the stem of the replaceable interdental brush to run across in a manner known per se.

Cap 3 has an overall length of about 20 mm; advantageously, the length of the base segment, i.e. the distance between the mouth 3a and the eye of inner end-stop 4b, is about 8 mm, in any case above 7 mm. This feature causes the base portion of cap 3 to offer a significant resistance to deformation and flexure: this makes it very unlikely, given the clearance existing between the cap and the end portion 1a of the support, for the edge of inner eye 4b to rise over pin 2a - for example due to excessive traction - and hence for cap 3 to accidentally slide off the support.

Conversely, the rounded top 1a' of the support defines a bevel sufficient to allow to easily fit cap 3 on the end portion 1a, despite the presence of pin 2a. As a matter of fact, thanks to the bevel of rounded off profile of top 1a', the edge of the base rim of the cap may be brought up to above pin 2a, the subsequent thrust causing a local deformation of cap 3, which ends up sliding into its operating position with the pin between the two eyes 4a and 4b. This desired deformability of the cap is facilitated also by the specific section shape of the end portion 1a of the support: as a matter of fact, the curved back of the D-section of the same cap is intended to slide on the bevelled profile of the support top 1a', resulting in a wide gap or initial clearance between cap 3 and support 1, which improves deformability of the former and hence an easy fitting of the same.

As already mentioned, the opposite process - i.e. removal of the cap - is instead prevented by the fact that no bevel exists allowing the edge of inner eye 4b to overcome pin 2a.

Thereby, a better guarantee over the prior art that cap 3 may not be accidentally removed is provided.

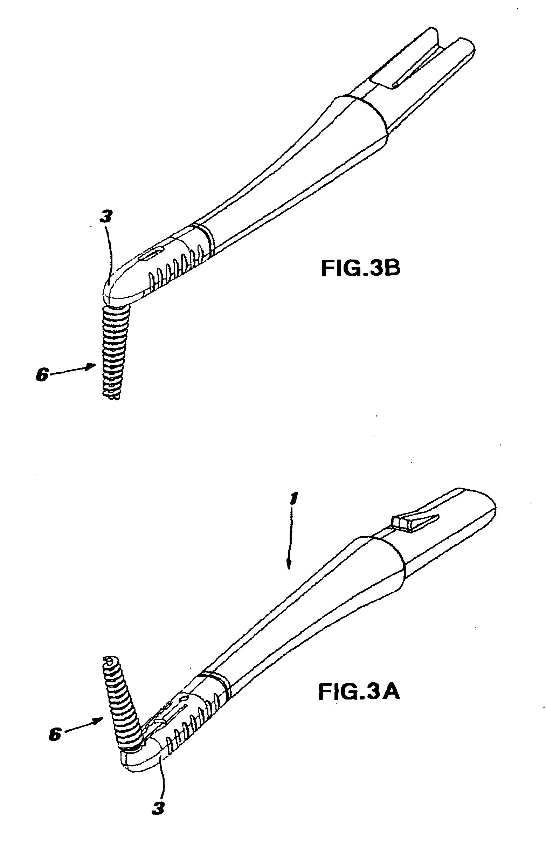

In figs. 3A, 3B, 4 and 5 a support 1 is shown assembled with its cap 3 in an operating position. It should be appreciated that the assembly is also equipped with an interdental brush 6, whose deformable stem (for example a double twisted wire) has been introduced into hole 2 while cap 3 was in its outer end-stop position - i.e. with eye 4b engaged with pin 2a and opening 5 in correspondence of hole 2 - end it has then been folded back and steadily housed in groove 1a'', moving the cap into the inner end-stop position - with eye 4a in correspondence of pin 2 (position of figs. 4 and 5).

The interdental brush device according to the invention fully achieves the objects set forth in the preliminary remarks, since it offers a structure which is much more efficient over the prior art to be able to comfortably fit the cap and avoid any accidental disengagement, thereby contributing to pleasantness and safety of use for the end user.

However, it is understood that protection of the invention described above is not limited to the particular embodiment shown, but extends to any equivalent embodiment defined by the claims.

In particular, as already mentioned, the interdental brush support may be manufactured integrally with a corresponding handle, rather than as two engageable components.

Moreover, despite what has been shown in the drawings in an exemplificative way (figs. 2A and 3A), thanks to the innovative configuration offered here, it is no longer necessary for the cap to be equipped with a flexible flap and side slits.

## Claims

1. Interdental brush device comprising
a support (1) with an end portion (1a) provided with a transversal hole (2) capable of housing a deformable stem of a replaceable interdental brush, and
a cap (3) which may be fitted on said end portion, being slidable between two end-stop positions determined by the abutment of a first opening (4) thereof with a pin (2a) projecting from said end portion (1a) coaxially with said transversal hole (2), said opening (4) having ends with round-shaped eyes (4a, 4b), the cap (3) further exhibiting a base segment, between a mouth rim (3a) thereof and a proximal edge (4b) of said first opening (4), and a second opening (5) opposite to the first one allowing said deformable stem to pass through,
**characterised in that** a top portion (1a') of said end portion (1a) has a curved back profile with a portion connecting with the pin (2a) at the top end of said support and a curvature radius of said profile decreasing towards the point of connection with pin (2a) from about 25 cm to about 2 cm, and **in that**
the cross-section profile of said end portion (1a) is rounded at least on its back side and is D-shaped with rounded-off edges.

2. Device as in claim 1), wherein said base segment is over 5 mm long.

## Patentansprüche

1. Interdentale Bürstenvorrichtung, umfassend
einen Träger (1) mit einem Endabschnitt (1a), der mit einem Querloch (2) versehen ist, das in der Lage ist, einen verformbaren Schaft einer auswechselbaren Interdentalbürste aufzunehmen, und
eine Kappe (3), die auf den genannten Endabschnitt aufgesetzt werden kann, wobei sie zwischen zwei Endanschlagspositionen verschieblich ist, die durch den Anschlag einer ersten Öffnung (4) davon gegen einen Stift (2) bestimmt sind, der von dem genannten Endabschnitt (1a) vorsteht, koaxial mit dem genannten Querloch (2), wobei die genannte Öffnung (4) Enden mit rund geformten Erweiterungen (4a, 4b) aufweist, wobei die Kappe (3) ferner ein Basissegment besitzt, zwischen einem Mündungsrand (3a) davon und einer proximalen Kante (4b) der ersten Öffnung (4), und eine zweite Öffnung (5) gegenüber der ersten Öffnung, die ermöglicht, dass der genannte verformbare Schaft hindurchgeht,
**dadurch gekennzeichnet, dass** ein oberer Abschnitt (1a') des genannten Endabschnitts (1a) ein zurück gebogenes Profil aufweist, mit einem Abschnitt, der eine Verbindung mit dem Stift (2a) an dem oberen Ende des genannten Trägers herstellt, und einem Krümmungsradius des genannten Profils, der in Richtung zu dem Punkt der Verbindung mit dem Stift (2a) von etwa 25 cm auf etwa 2 cm abnimmt, wobei
das Querschnittsprofil des genannten Endabschnitts (1a) zumindest an seiner Rückseite gerundet ist und D-förmig mit abgerundeten Kanten ist.

2. Vorrichtung nach Anspruch 1, **dadurch gekennzeichnet, dass** das genannte Basissegment mehr als 5 mm lang ist.

## Revendications

1. Dispositif de brosse interdentaire comprenant :
un support (1) avec une partie d'extrémité (1a) dotée d'un trou transversal (2) pouvant loger une tige déformable d'une brosse interdentaire remplaçable, et
un capuchon (3) qui peut être monté sur ladite partie d'extrémité, pouvant coulisser entre deux positions de fin de course déterminées par la butée de sa première ouverture (4) avec une broche (2a) faisant saillie de ladite partie d'extrémité (1a) de manière coaxiale par rapport audit trou transversal (2), ladite ouverture (4) ayant des extrémités avec des oeillets de forme ronde (4a, 4b), le capuchon (3) laissant en outre apparaître un segment de base, entre son bord d'embouchure (3a) et un bord proximal (4b) de ladite première ouverture (4), et une seconde ouverture (5) opposée à la première permettant à ladite tige déformable de passer à travers,
**caractérisé en ce qu'**une partie supérieure (1a') de ladite partie d'extrémité (1a) a un profil arrière incurvé avec une partie se raccordant avec la broche (2a) au niveau de l'extrémité supérieure dudit support et un rayon de courbure dudit profil diminuant vers le point de raccordement avec la broche (2a) d'environ 25 cm à environ 2 cm, et **en ce que** :
le profil transversal de ladite partie d'extrémité (1a) est arrondi au moins au niveau de son côté arrière et est en forme de D avec des bords arrondis.

2. Dispositif selon la revendication 1, dans lequel ledit segment de base mesure plus de 5 mm de long.
